# EUROPEAN PATENT APPLICATION

(11) **EP 3 388 277 A1**
(43) Date of publication of application: **17.10.2018**
(21) Application number: 17166115.0
(22) Date of filing: 11.04.2017
(51) Int. Cl.: B60L 11/18

(54) **CHARGING CABLE AND CHARGING METHOD FOR ELECTRICAL VEHICLES**

(71) Applicant: SOME BVBA, 2230 Herselt (BE)
(72) Inventor: RAETS, Erwin, 2230 Herselt (BE)
(74) Representative: Brantsandpatents bvba

(57) **Abstract**

The present invention concerns a charging cable for charging an electrical vehicle (EV), with a vehicle plug with a communication module with a wireless transmitter. The housing of the communication module comprises two compartments pressed against each other in a watertight manner by clamping means in the vehicle plug housing around an aperture in the plug housing. The present invention also concerns a related charging method, kit, and charging systems.

## Description

### Technical field

The present application concerns a cable and method for charging electrical vehicles (EV), in particular electrical cars. More in particular, the present application concerns a charging cable for providing easy access to a charge port of an EV. The charging cable hereby can be coupled at one end to the charge port of the EV and at the other end to a charging station.

### Background

Electrical vehicles (EVs), and in particular electrical cars, are a main area of current research and development. The main advantage of EVs is their eco-friendliness. The use of an electrical battery system as a power source, ensures an optimal conversion from electrical energy to mechanical energy, while the battery system of the EV can be charged with any type of electrical energy, including CO₂-neutral energy such as solar energy and wind energy.

EVs have a battery or battery system which needs to be recharged regularly. In fact, the current range of EVs is limited severely by the maximal storage capacity of the battery system. Furthermore, commercial roadside fueling stations for EVs are still not readily available. Even if they are, the driver of the EV needs to check if the fuel station has the correct type of charging station and the correct type of connections for the specific EV.

Owners of an EV typically have a charging station at their private homes or at a workplace, which is specifically installed for the specific type of EV. These charging stations are equipped with charging cables which are also particularly adapted to the EV and are provided with systems or devices which make the charging station easy to use.

Document US 2013/0074411 A1 discloses a fuel delivery system and method of use that may be used to open the door covering the charge port of an electric vehicle, or the door covering the fuel filler port of a conventional vehicle. The system includes a fuel coupler (e.g., a charging connector or a gas nozzle) designed to transfer fuel from the source to the vehicle via the vehicle's fuel port. The fuel coupler includes a switch that when toggled, causes a control signal to be wirelessly transmitted over a short distance. Upon receipt of the control signal by a receiver integrated into a vehicle that is in close proximity to the fuel port, an unlatching actuator within the vehicle unlatches the port door, thereby allowing it to open and provide port access. In the case of an EV, the wireless transmitter can be incorporated in the charging connector and hereby can draw power from the power lines in the charging connector. In the above case, the fuel coupler is connected to the fuel source.

The problem with the above system, is that one always requires the combination of specific charging station and specific charging cable to be present for a specific type of EV. Furthermore, the charging cable needs to be connected to the charging station in order for the wireless transmitter to receive power.

Hence, there is a need for a charging cable, a charging system and/or a charging method for EVs which allows connection of an EV to a multitude of charging stations while ensuring the same ease of use with respect to performing the charging procedure. There also is a need for a cable which can be used with different types and brands of EVs.

The present invention thereto provides a charging cable for connecting an EV to charging stations, both dedicated home-installed charging stations as roadside stations, whereby the charging cable provides the same ease of use for performing the charging procedure as dedicated charging systems for the EV. The present invention also provides a charging cable which can be easily configured or reconfigured to be able to be used to charge different types or brands of EV.

### Summary of the invention

In a first aspect the present invention concerns a charging cable for charging an electrical vehicle (EV), the charging cable comprising a vehicle plug for connection to a charge port of the EV and a station plug for connection to a charging station, and a set of electrical wires in between, the set of electrical wires comprising at least a set of power lines and preferably a set of communication wires, wherein the vehicle plug comprises a plug housing and a communication module. The charging cable thus allows connection and disconnection from both the EV as the charging station, which also allows taking the cable in the car for long trips such that it can be used in road-side charging stations.

The plug housing comprises a first plug housing compartment with a first plug housing edge and a second plug housing compartment with a second plug housing edge which corresponds to and is pressed against said first plug housing edge thereby forming the plug housing, and wherein the first and second plug housing edges define an aperture for an outer surface of the communication module. Providing the vehicle plug housing in two compartments allows easy assembly and, perhaps more importantly, easy access to the communication module. The aperture in the plug housing allows manipulating the communication module directly via an outer surface of the communication module. This allows e.g. a button to be present or any other type of control means for controlling the actions of the communication module. It also allows to change the communication module together with its control means, e.g. a communication module with a button to press can easily be interchanged with a communication module with a switch or even a touch screen.

The communication module comprises a communication housing comprising an upper communication housing compartment with a first communication housing rim and a lower communication housing compartment with a second communication housing rim which corresponds to and is pressed against the first communication housing rim in a water-tight manner, the communication module further comprising a battery-powered wireless transmitter configured to send a signal to the EV, preferably a signal requesting the EV to open a charge port covering, and a battery for powering said wireless transmitter, wherein the upper housing compartment comprises said outer surface in functional connection with the transmitter such that the transmitter can be operated via said outer surface. The two communication module housing compartments can be made watertight by pressing the one compartment onto the other, optionally with a gasket in between, i.e. no screwing or other type of connection is involved. This ensures easy replacement of the battery inside, as well as of any circuitry inside the communication module housing.

The first plug housing compartment and the second plug housing compartment comprise a clamping means around said aperture for clamping the first communication housing rim to the second communication housing rim in a watertight manner. Rather than requiring screws, bolts or other type of attachments, the communication housing compartments are pressed with their rims upon each other by insertion of the two rims into the clamping means, preferably a slit or recess, in the plug housing compartments. As the clamping means is provided around the aperture, the insertion of the rims into the clamping means ensures that at least one surface of the communication module, i.c. the outer surface, is reachable by the user of the charging cable.

Preferably, said vehicle plug and/or said station plug is SAE J1772 compliant or said vehicle plug and/or said station plug is IEC 62196 compliant. SAE J1772 and IEC 62196 are standards for connectors for EVs.

SAE J1772 (IEC Type 1) is a North American standard for electrical connectors for electric vehicles maintained by the SAE International and has the formal title "SAE Surface Vehicle Recommended Practice J1772, SAE Electric Vehicle Conductive Charge Coupler". It covers the general physical, electrical, communication protocol, and performance requirements for the electric vehicle conductive charge system and coupler. The intent is to define a common electric vehicle conductive charging system architecture including operational requirements and the functional and dimensional requirements for the vehicle inlet and mating connector.

IEC 62196 Plugs, socket-outlets, vehicle couplers and vehicle inlets - Conductive charging of electric vehicles is an international standard for a set of electrical connectors for electric vehicles and is maintained by the International Electrotechnical Commission (IEC). The standard is based on IEC 61851 Electric vehicle conductive charging system which establishes general characteristics, including charging modes and connection configurations, and requirements for specific implementations (including safety requirements) of both electric vehicle (EV) and electric vehicle supply equipment (EVSE) in a charging system. For example, it specifies mechanisms such that, first, power is not supplied unless a vehicle is connected and, second, the vehicle is immobilized while still connected. IEC 62196 comprises:
Part 1: General requirements (IEC-62196-1)
Part 2: Dimensional compatibility and interchangeability requirements for a.c. pin and contact-tube accessories (IEC-62196-2)
Part 3: Dimensional compatibility and interchangeability requirements for d.c. and a.c./d.c. pin and contact-tube vehicle couplers (IEC-62196-3).
Every connector includes control signaling, not only allowing control of local charging, but allowing the EV to participate in a wider electric vehicle network. The signaling from SAE J1772 is incorporated in the standard for control purposes. All connectors can be converted with passive or simple adapters, although possibly not with all charging modes intact. The following standards are incorporated as connector types:
- SAE J1772, known colloquially as the Yazaki connector or Type 1, in Northern America;
- VDE-AR-E 2623-2-2, known colloquially as the Mennekes connector or Type 2, in Europe;
- EV Plug Alliance proposal, colloquially known as the Scame connector or Type 3, in Italy and France;
- JEVS G105-1993, with the trade name, CHAdeMO, in Japan;
- A Combined Charging System (CCS) plug, which is capable of carrying DC and AC current.

In a second aspect, the present invention provides a method for charging an EV, comprising the steps of:
(A) providing a charging cable according to the present invention and a charging station;
(B) opening a charge port covering of the EV via the wireless transmitter in the communication module of the vehicle plug of the charging cable and connecting the vehicle plug to the charge port of the EV;
(C) connecting the station plug of the charging cable to the charging station, preferably subsequently to step (B);
(D) charging the EV by providing electrical power from the charging station to a battery of the EV via said charging cable.
This method allows charging the EV on any charging station, including a private, dedicated charging station and a commercial roadside charging station, as the charging cable can be easily connected and disconnected from both the charging station and the charge port of the EV. Furthermore, the ease of use which is present in dedicated charging systems, can be reproduced here as the vehicle plug of the charging cable can be provided with the same type of interface as the connector plug of a dedicated charging system. All that is required is that the correct communication module is present in the vehicle plug of the present charging cable. Furthermore, the current cable allows opening the charge port prior to connection of the cable to the charging station, which can be beneficial for a number of reasons, including ease of use and safety (no prior connection to the charging station, so no power transmission possible at the moment of connecting the cable to the EV).

In a third aspect, the present invention concerns a kit for assembling a vehicle plug for use in a charging cable according to the present invention, the kit comprising a first plug housing compartment, a second plug housing compartment, an upper communication module housing compartment, a lower communication module housing compartment, a battery-powered wireless transmitter configured to send a signal to the EV.

In a further aspect, the present invention concerns a charging system comprising a charging cable according to the present invention, and a charging station, preferably the system being configured to perform the method according to the present invention.

The present invention also concerns a charging system comprising a charging cable, a charging station and a power distribution board, the charging cable comprising at least a set of power lines and a vehicle plug for connection to an EV, the vehicle plug provided with a communication module with an outer surface in functional connection with a PLC circuit in the communication module, the PLC circuit connected to the power lines and configured to send a signal via said power lines, the charging cable comprising a station plug for connection to the charging station and the charging station and/or the power distribution board being configured to interpret the signal sent by the PLC circuit according to a predefined PLC protocol. This system allows the cable to be actually part of the internet of things, via a power line communication circuit in the communication module, which can be operated by the user via the outer surface thereof, e.g. via a button, a switch, a touch screen, or other control means on the outer surface.

### Short description of the Figures

**Figure 1** shows a vehicle plug according to the present invention whereby the parts of the communication module are separately shown out of the plug.

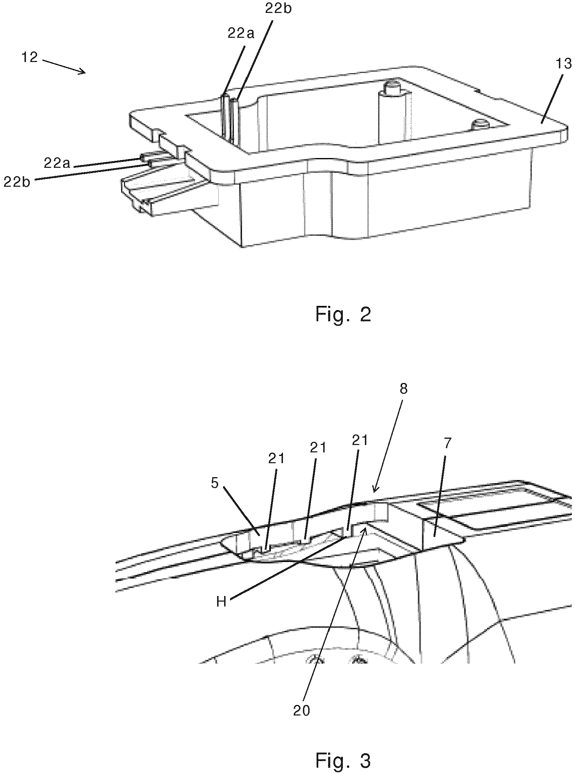

**Figure 2** shows a close-up of the lower communication module housing compartment.
**Figure 3** shows a close-up of the aperture in the plug housing.
**Figure 4** shows a charging system according to an aspect of the present invention, the system comprising a power distribution board, a charging station and a charging cable.

### Detailed description of the invention

In the following the invention is described in more detail with reference to the drawings.

The present invention concerns in a first aspect a charging cable. The charging cable has a set of electrical wiring, including a set of power lines, which are capable of guiding high electrical current, typically 16A or 32A, and typically one-phase or three-phase current, from a power source, i.c. a charging station, to a battery or a battery system of an EV to charge said battery or battery system. Hence, the cable may comprise two, three, four, five or more power lines. In a particularly preferred embodiment, the cable comprises five power lines: a ground (PE), a neutral or neuter (N), and three power lines for a three-phase current (L1, L2, L3). The electrical wiring may preferably also include communication wires, preferably at least one communication wire such as a control pilot (CP) line. The vehicle plug and also the station plug may also be provided with a proximity pilot (PP) pin. Hereby, in an embodiment, the EV is configured to measure a resistance between the PP and the ground (PE) and to obtain the type of charging cable, in particular the maximal current it can carry. For instance, if the EV measures a resistance between the PP and the PE of 220 Ohm, the EV can deduce that the charging cable is adapted for a maximal current of 32 A, whereas if the EV measures a resistance between PP and PE of 680 Ohm, the EV can deduce that the maximal current is 16 A for that charging cable. However, all types of connectors are possible, including but not limited to:
- Type 1 (SAE J1772-2009), Yazaki
- Type 2 (VDE-AR-E 2623-2-2), Mennekes
- Type 3 (EV Plug Alliance connector), Scame
- Type 4 (JEVS G105-1993), CHAdeMO
- CCS plug

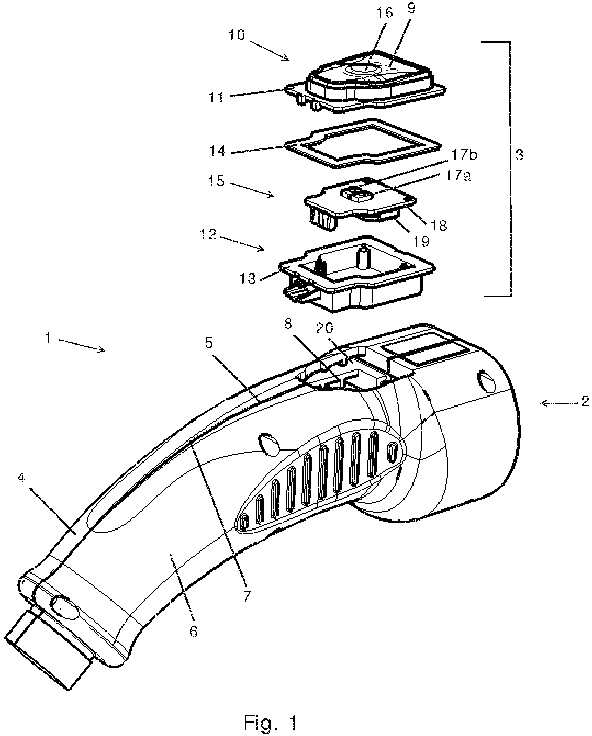

The charging cable comprises a station plug and a vehicle plug (1). The vehicle plug comprises a plug housing (2) and a communication module (3). The plug housing (1) comprises a first plug housing compartment (4) with a first plug housing edge (5) and a second plug housing compartment (6) with a second plug housing edge (7) which corresponds to and is pressed against said first plug housing edge (5). As such, figure 1 shows a seam running longitudinally where the two edges meet and are pressed onto each other, thereby forming the plug housing. The first and second plug housing edges define an aperture (8) for an outer surface (9) of the communication module (3).

The communication module (3) comprises a communication housing comprising an upper communication housing compartment (10) with a first communication housing rim (11) and a lower communication housing compartment (12) with a second communication housing rim (13) which corresponds to and is pressed against the first communication housing rim in a water-tight manner. Watertightness can be ensured with a gasket (14) positioned in between the rims.

The communication module further comprising a battery-powered wireless transmitter (15) configured to send a signal to the EV, preferably a signal requesting the EV to open a charge port covering, and a battery for powering said wireless transmitter.

The wireless transmitter preferably comprises a programmable and preferably a reprogrammable transmitter component, which can be configured or reconfigured to ensure that a specific wireless signal is wirelessly sent, the specific wireless signal possibly depending upon the brand or type of car. This could be done rather similar as for a remote keyless system which can be built into a car key. In this way, a user can program or reprogram the communication module and the wireless transmitter in particular, for a different type of brand of EV, thereby allowing that the charging cable can also be used after obtaining a different type of EV which also is configured to open a charge port covering upon receival of a wireless signal. In a preferred embodiment, the programming or reprogramming of the wireless transmitter can be performed while the wireless transmitter and the communication module are still present in the vehicle plug, possibly by a separate programming application, and e.g. via wireless programming or with instructions sent via connection pins which provide a watertight electrical connection through the communication module housing to the power lines, communication lines or any other types of pins in the vehicle plug or charging cable.

In a preferred embodiment, the wireless transmitter is configured to send the signal at an electromagnetic frequency between 50 MHz and 1 Ghz, preferably between 100 MHz and 700 MHz, more preferably between 200 MHz and 500 MHz, such as around 315 MHz and/or around 433.92 MHz.

The upper housing compartment (10) comprises the outer surface (9) in functional connection with the transmitter when the communication module is assembled, such that the transmitter can be operated via said outer surface (9). In the shown embodiment, the outer surface (9) comprises a bendable portion (16) which acts as a pressing button to the user. When this bendable portion (16) is pressed, a set of one, two or more buttons, in the shown embodiment two buttons (17a, 17b), on the transmitter are being pressed, whereby the transmitter preferably comprises a pcb (18) with a wireless transmitting circuitry (19) and possibly any other type of circuitry, such as a PLC circuit.
The first plug housing compartment (4) and the second plug housing compartment (6) comprise a clamping means (20), here in the form of a recess with internal teeth (21) which define a recess height (H) essentially corresponding with the combined heights of the two rims of the upper and lower communication module housing compartments (10, 12), thereby allowing the recess to clamp the rims (11, 13) onto each other and ensure watertightness of the communication module. The recess is provided around the aperture (8).

In a preferred embodiment, the communication module (3), and particularly preferred the lower housing compartment thereof (12), comprises a set of one, two, three, four or more connection pins, in the shown embodiment two connection pins (22a, 22b), which provide a watertight electrical connection through the communication housing thereby allowing an electrical circuit, e.g. a PLC circuit on the pcb (18) inside the communication housing to be connected to at least one electrical wire, preferably at least a pair of electrical wires, of the set of electrical wires of the charging cable.

Hereby, preferably at least a first subset of the set of connection pins is connected to said set of power lines for power line communication with the charging station and/or the EV, and more preferably, the communication module comprises a power line communication module arranged for sending a power line communication signal over the set of power lines of the charging cable, preferably PLC module operated via said outer surface.

In an embodiment, the charging cable comprises a set of communication wires, wherein at least a second subset of the set of connection pins (22a, 22b) is connected to said set of communication wires, and wherein the communication module comprises a wired communication module arranged for sending a wired signal over at least one of the power lines and at least one for the communication lines, preferably said wired signal signaling the end of the charging procedure and preferably said signal involving temporarily changing a resistance between a power line, preferably a ground or a neuter, and a communication pin in the vehicle plug or a communication line.

In a preferred embodiment, the clamping means (20) comprise a slit or recess surrounding the aperture in the plug housing, said slit or recess configured to receive the rims (11, 13) of the upper (10) and lower (12) communication housing compartments and to exert a force pressing said rims onto each other upon inserting the rims into said slit or recess.

In a related aspect, the present invention concerns a method for charging an EV, comprising the steps of:
(A) providing a charging cable according to any of the previous claims and a charging station;
(B) opening a charge port covering of the EV via the wireless transmitter in the communication module of the vehicle plug of the charging cable and connecting the vehicle plug to the charge port of the EV;
(C) connecting the station plug of the charging cable to the charging station, preferably subsequently to step (B);
(D) charging the EV by providing electrical power from the charging station to a battery of the EV via said charging cable.

Note that performing step (B) prior to step (C) is contrary to state of the art techniques which require that the cable is first connected to the charging station and only then can be used to open the charge port. In this respect, the battery-powered wireless transmitter allows the above order of steps.

Preferably, the method also comprises the step of signaling the end of the charging procedure via over at least one of the power lines and at least one of the communication lines or over a communication pin in the vehicle plug, preferably by temporarily changing a resistance between a power line, preferably a ground such as a PE or a neuter, and a communication pin, such as a PP. Most preferred is a temporary change in resistance between PE end PP to a value around 440 Ohm, to signal the end of the charging procedure. Hereby, the resistance between PE and PP during normal charging is preferably around 220 Ohm for a 32A charging cable and around 680 Ohm for a 16A charging cable.

The present invention also concerns a charging system comprising a charging cable, a charging station and a power distribution board, the charging cable comprising at least a set of power lines and a vehicle plug for connection to an EV, the vehicle plug provided with a communication module with an outer surface in functional connection with a PLC circuit in the communication module, the PLC circuit connected to the power lines and configured to send a signal via said power lines, the charging cable comprising a station plug for connection to the charging station and the charging station and/or the power distribution board being configured to interpret the signal sent by the PLC circuit according to a predefined PLC protocol. Hereby, preferably, the charging cable is a charging cable according to the present invention. In an embodiment, the charging cable is connected to the charging station in a fixed manner or - in an alternative embodiment - in a disconnectable manner.

In a preferred embodiment, the signal sent by the PLC circuit comprises a request for prioritizing a charging procedure of the EV connected to the charging cable. This can be done if a quick charging of the EV is desired, by simply pressing the button or any other type of control means, located at the vehicle plug of the charging cable.

In a very preferred embodiment, the power distribution board is configured to collect data corresponding to electrical power usage via said power distribution board, and wherein the power distribution board is configured to transmit at least part of said electrical power usage data to said charging station via power line communication, and wherein said charging station is configured to adapt electrical charging current for said EV, taking into account said transmitted part of said electrical power usage data, thereby optimizing the charging current for the EV. Such a system allows an optimal use of the total power distribution for e.g. a house or a roadside charging station, wherein the power use and power generation, e.g. from solar cells, is monitored regularly. For instance, if solar cells are producing a lot of electricity, it is better to use this surplus of electricity to charge the EV, than to send that power to the power grid, or vice versa, if an EV needs power quickly, and the transferred data show that such power is available from e.g. solar cells or it is available cheaply, than the charging station may decide to present the EV with more power than normal.

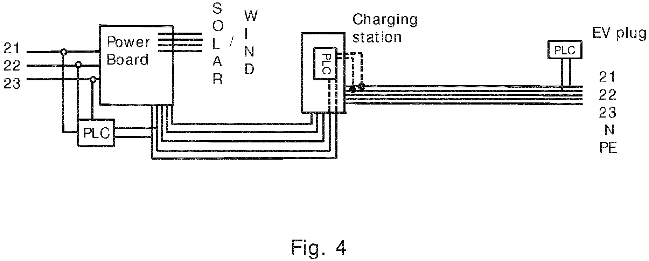

An exemplary embodiment is shown in fig. 4. Here, a power distribution board ("Power Board") on the left side of the figure receives three phases from the power grid (L1, L2, L3) and can receive power from e.g. a solar cell or wind energy installation. The power distribution board is connected to a charging station (in the middle in fig. 4) via a set of power lines and optionally also communication lines. The charging station is connected with at least a set of power lines to a vehicle plug, e.g. by a charging cable according to the present invention. The power distribution board, the charging station and the charging cable, preferably the vehicle plug thereof, are provided with power line communication (PLC) circuitry.

In the embodiment shown in fig. 4,
- a circuit board in the power board measures the amps of each incoming phase (1-phase or 3-phase);
- the circuit board communicates this data via Powerline Communication to the charging station;
- a circuit board in the charging station reads the PLC data and compares to preset reference values;
- the above circuit board in the charging station raises/lowers the charging power to the EV according to above comparisons.

Solar panels or wind generated power are connected to the power board after the point where the readings are done. This means that when power is generated by Solar/Wind, it will decrease the amp readings of the incoming grid current, allowing the charging station to raise charging power to the vehicle, without overloading the grid connection.

A button on the vehicle plug can send a signal, over powerline, to the charging station, which in turn sends the request over powerline to the powerboard, to give priority to charging the vehicle.

This request can activate logic to shut down other, i.c. low-priority, household appliances (using IoT functionality) to free up capacity for charging the vehicle faster.

A very big advantage of this setup is that it can be implemented using an existing home charging infrastructure without the need for extra cabling or wireless transmissions. Using a module in the power board and a module in the charging station is all that is needed to make the above setup work.

## Claims

1. A charging cable for charging an electrical vehicle (EV), the charging cable comprising a vehicle plug for connection to a charge port of the EV and a station plug for connection to a charging station, and a set of electrical wires in between, the set of electrical wires comprising at least a set of power lines and preferably a set of communication wires, wherein the vehicle plug comprises a plug housing and a communication module, wherein the plug housing comprises a first plug housing compartment with a first plug housing edge and a second plug housing compartment with a second plug housing edge which corresponds to and is pressed against said first plug housing edge thereby forming the plug housing, and wherein the first and second plug housing edges define an aperture for an outer surface of the communication module,
wherein the communication module comprises a communication housing comprising an upper communication housing compartment with a first communication housing rim and a lower communication housing compartment with a second communication housing rim which corresponds to and is pressed against the first communication housing rim in a water-tight manner, the communication module further comprising a battery-powered wireless transmitter, which preferably is reprogrammable, the transmitter being configured to send a signal to the EV, preferably a signal requesting the EV to open a charge port covering, and a battery for powering said wireless transmitter, wherein the upper housing compartment comprises said outer surface in functional connection with the transmitter such that the transmitter can be operated via said outer surface,
wherein the first plug housing compartment and the second plug housing compartment comprise a clamping means around said aperture for clamping the first communication housing rim to the second communication housing rim in a watertight manner,
preferably whereby said vehicle plug and/or said station plug is any of the following types:
- SAE J1772;
- VDE-AR-E 2623-2-2;
- EV Plug Alliance proposal;
- JEVS G105-1993; or
- A Combined Charging System (CCS) plug, which is capable of carrying DC and AC current.

2. A charging cable according to claim 1, wherein the communication module comprises a set of connection pins providing a watertight electrical connection through the communication housing thereby allowing an electrical circuit inside the communication housing to be connected to at least one electrical wire, preferably at least a pair of electrical wires, more preferably multiple pairs of electrical wires, of said set of electrical wires.

3. A charging cable according to claim 2, wherein at least a first subset of the set of connection pins is connected to said set of power lines for power line communication with the charging station and/or the EV.

4. A charging cable according to claim 3, wherein the communication module comprises a power line communication module arranged for sending a power line communication signal over the set of power lines of the charging cable, preferably PLC module operated via said outer surface.

5. A charging cable according to any of the claims 3 or 4, wherein the charging cable comprises a set of communication wires and/or the vehicle plug comprises a set of communication pins, wherein at least a second subset of the set of connection pins is connected to said set of communication wires and/or said set of communication pins, and wherein the communication module comprises a wired communication module, preferably wherein the wired communication module is arranged to set the resistance between a power line, preferably a ground, and a communication pin or communication line, most preferably the resistance between a ground (PE) and a communication pin (PP), for allowing determination of the type of charging cable by the EV by measurement of said resistance,
wherein the wired communication module is arranged for sending a wired signal over at least one of the power lines and at least one for the communication lines and/or communication pins, preferably said wired signal signaling the end of the charging procedure and preferably said signal involving temporarily changing a resistance between a power line, preferably a ground, and a communication pin or communication line, most preferably by temporarily changing the resistance between a ground (PE) and a communication pin (PP).

6. A charging cable according to any of the previous claims, wherein the clamping means comprise a slit or recess surrounding the aperture in the plug housing, said slit or recess configured to receive the rims of the upper and lower communication housing compartments and to exert a force pressing said rims onto each other upon inserting the rims into said slit or recess.

7. Method for charging an EV, comprising the steps of:
(A) providing a charging cable according to any of the previous claims and a charging station;
(B) opening a charge port covering of the EV via the wireless transmitter in the communication module of the vehicle plug of the charging cable and connecting the vehicle plug to the charge port of the EV;
(C) connecting the station plug of the charging cable to the charging station, preferably subsequently to step (B);
(D)charging the EV by providing electrical power from the charging station to a battery of the EV via said charging cable.

8. Method according to claim 7, comprising the step of signaling the end of the charging procedure via over at least one of the power lines and at least one of the communication lines and/or at least one of a set of communication pins in the vehicle plug, preferably by temporarily changing a resistance between a power line, preferably a ground, and a communication pin or communication line, most preferably by changing a resistance between a ground (PE) and a communication pin (PP) in the vehicle plug.

9. A kit for assembling a vehicle plug for use in a charging cable according to any of the claims 1 to 6, the kit comprising a first plug housing compartment, a second plug housing compartment, an upper communication module housing compartment, a lower communication module housing compartment, a battery-powered wireless transmitter configured to send a signal to the EV.

10. Charging system comprising a charging cable according to any of the claims 1 to 6, and a charging station, preferably the system being configured to perform the method according to any of the claims 7 or 8, optionally wherein the charging cable is connected to the charging station in a fixed or a disconnectable manner.

11. Charging system comprising a charging cable, a charging station and a power distribution board, the charging cable comprising at least a set of power lines and a vehicle plug for connection to an EV, the vehicle plug provided with a communication module with an outer surface in functional connection with a PLC circuit in the communication module, the PLC circuit connected to the power lines and configured to send a signal via said power lines, the charging cable comprising a station plug for connection to the charging station and the charging station and/or the power distribution board being configured to interpret the signal sent by the PLC circuit according to a predefined PLC protocol.

12. Charging system according to claim 11, wherein the charging cable is a charging cable according to any of the claims 1 to 6.

13. Charging system according to claims 11 or 12, wherein the signal sent by the PLC circuit comprises a request for prioritizing a charging procedure of the EV connected to the charging cable.

14. Charging system according to any of the claims 11 to 13, wherein the power distribution board is configured to collect data corresponding to electrical power usage via said power distribution board, and wherein the power distribution board is configured to transmit at least part of said electrical power usage data to said charging station via power line communication, and wherein said charging station is configured to adapt electrical charging current for said EV, taking into account said transmitted part of said electrical power usage data, thereby optimizing the charging current for the EV.
